# EUROPÄISCHE PATENTSCHRIFT

(11) **EP 1 154 957 B1**
(45) Veröffentlichungstag und Bekanntmachung des Hinweises auf die Patenterteilung: **06.05.2004**
(21) Anmeldenummer: 00912373.8
(22) Anmeldetag: 14.02.2000
(51) Int. Cl.: C02F 9/00

(54) **VORRICHTUNGEN ZUR VERSORGUNG AUTARKER GEBÄUDE**
DEVICES FOR SUPPLYING AUTARKIC BUILDINGS
DISPOSITIFS D'APPROVISIONNEMENT DE BATIMENTS AUTONOMES

(30) Priorität: 13.02.1999 DE 19906114; 14.06.1999 DE 19927056
(43) Veröffentlichungstag der Anmeldung: 21.11.2001
(73) Patentinhaber: Kaufmann, Klaus, 81827 München (DE)
(72) Erfinder: Kaufmann, Klaus, 81827 München (DE)
(74) Vertreter: Castell, Klaus, Dr.-Ing.
(86) Internationale Anmeldenummer: PCT/DE2000/000415
(87) Internationale Veröffentlichungsnummer: WO 2000/047526

(56) Entgegenhaltungen:
- EP-A- 0 867 226
- CA-A- 2 178 118
- DE-A- 3 112 647
- US-A- 3 669 879
- US-A- 4 025 425
- US-A- 5 143 630
- PATENT ABSTRACTS OF JAPAN vol. 014, no. 106 (C-0694), 27. Februar 1990 (1990-02-27) & JP 01 310667 A (NISSHO CORP), 14. Dezember 1989 (1989-12-14)
- DATABASE WPI Week 198543 Derwent Publications Ltd., London, GB; Page 4, AN 1985-268399 XP002141069 "Centrifugal separator for culture media - contains space between ring magnet core filled with magnetic liquid as hermetical seal abouve support or driving shaft" & SU 1 150 037 A ((BIOC-R) APPL BIOCHEM RES DE), 15. April 1985 (1985-04-15)

## Beschreibung

Die Erfindung betrifft Vorrichtungen zur Versorgung autarker Gebäude.

Große Problembereiche bei der Versorgung autarker Gebäude bilden die Energieversorgung und die Trinkwasserversorgung. Hierzu wurden zahlreiche Konstruktionen vorgeschlagen, die jedoch meistens relativ teuer in der Herstellung und dem Unterhalt sind. Die bisher verwendeten Konstruktionen sind meist aufwendig und vom Laien schwer bedienbar.

Die folgenden Dokumente CA-A-2 178 118, DE-A-31 12 647 sowie die US-A-3 669 879 offenbaren eine Vorrichtung mit einem Zu- und Ablauf, einem Membranelement und einer Druckerhöhungseinrichtung, die um eine Achse drehbar gelagert ist.

Der Erfindung liegt daher die Aufgabe zugrunde, Vorrichtungen zur Versorgung autarker Gebäude bereitzustellen, mit denen die Trinkwasserversorgung, die Energieversorgung und der Energietransport optimiert werden kann.

Die Aufgabe der Trinkwasserversorgung wird mit einer Vorrichtung zur Reinigung von Flüssigkeiten mit einem Zulauf, einer Druckerhöhungseinrichtung, die einen Filterbereich aufweist, einem Membranelement und einem Ablauf gelöst, bei der die Druckerhöhungseinrichtung um eine Achse drehbar gelagert ist, so dass Zentrifugalkräfte zwischen Zulauf und Ablauf auf die Flüssigkeit wirken, wobei eine Vorreinigungsstufe mit einem im Wesentlichen tangentialen Kanalsystem mit radialen Öffnungen, die einen Zufluss, einen Auslauf für schwere Partikel und eine Einlassöffnung, durch die die Flüssigkeit in den Filterbereich strömt, aufweist.

Die Verwendung einer um eine Achse drehbaren Druckerhöhungseinrichtung verhindert periodische Pumpbewegungen und erlaubt somit eine optimale Ausnutzung der eingesetzten Kraft. Die Leistung der Druckerhöhungseinrichtung ist durch die Variation der Drehzahl in weiten Bereichen einstellbar und kann somit optimal an die zur Verfügung stehende Kraft angepasst werden. Dies ermöglicht den Betrieb der Vorrichtung mittels solarer Kraft erzeugender Anlagen.

Ein einfacher Aufbau der Vorrichtung wird dadurch erzielt, dass der Zulauf konzentrisch zum Membranelement angeordnet ist.

Gute Erfahrungen wurden mit einem Membranelement erzielt, das ein Hohlfaserbündel aufweist. Derartige Hohlfaserbündel haben sich in der Trinkwassergewinnung bestens bewährt. Diese Hohlfaserbündel werden vorzugsweise radial als Membranzylinder angeordnet, so dass die auf die Membranen wirkenden Zentrifugalkräfte die Membranen nicht aufeinander drücken.

Vorteilhaft ist es, wenn die Membranzylinder an einem Ende vorzugsweise im Schleudergussverfahren in Vergussharz eingeschlossen sind. Das Schleudergussverfahren bietet die Möglichkeit, die Enden des Hohlfasermembranbündels fest einzugießen. Bei der Verwendung von Endlosmembranzylindem kann an einer Seite der Vergussmasse ein Hohlfaseraustritt freigeschliffen werden.

Da die Qualität der Membranen häufig nicht so gut ist, dass beispielweise aus Meerwasser einwandfreies Trinkwasser erzeugt werden kann, wird vorgeschlagen, dass die Vorrichtung zwei hintereinander geschaltete Membranelemente aufweist. Diese Membranelemente sind vorzugsweise auf dem gleichen Rotationskörper angebracht, so dass mit einer einzigen Zentrifuge eine extrem hohe Qualität des Wassers erreicht werden kann.

Eine besonders vorteilhafte Ausgestaltungsform der erfindungsgemäßen Vorrichtung sieht vor, dass die Druckerhöhungseinrichtung tangential angeordnete Auslassdüsen aufweist. Der Druckerhöhungseinrichtung wird in der Regel Salzwasser zugeführt und aufkonzentriertes Salzwasser und Reinwasser verlässt die Druckerhöhungseinrichtung. Sowohl der Reinwasserstrom als auch der Strom des aufkonzentrierten Salzwassers kann über tangentiale Düsen die Vorrichtung verlassen, so dass der im Flüssigkeitsstrom herrschende Überdruck seine Energie als Rückstoß an die Druckerhöhungseinrichtung weitergibt und somit die Drehung der Druckerhöhungseinrichtung antreibt.

Um die auf die Druckerhöhungseinrichtung wirkenden Reibungskräfte möglichst weit zu minimieren, wird vorgeschlagen, dass die Druckerhöhungseinrichtung in einem teilweise evakuierten Raum angeordnet ist. Hierbei wird vorgeschlagen, dass beispielsweise eine Wasserstrahlpumpeneinrichtung zur Evakuierung des Raumes dient.

Zur weiteren Reibungsreduzierung wird vorgeschlagen, dass die Druckerhöhungseinrichtung mit einer magnetischen Flüssigkeit abgedichtet ist. Um den von der Druckerhöhungseinrichtung auf das zu filtrierende Medium übertragenen Impuls zu nutzen, wird vorgeschlagen, dass die Druckerhöhungseinrichtung relativ zu einem sich radial nach außen konisch verjüngenden ringförmigen Spalt beweglich angeordnet ist. Die Flüssigkeit kann sich somit in diesem Spalt sammeln, dort eine Ringströmung erzeugen und den Spalt mit erhöhtem Druck verlassen. Dadurch kann beispielsweise die gereinigte Flüssigkeit in einen höher gelegenen Tank gefördert werden.

Eine vorteilhafte Ausgestaltung der Vorrichtung sieht vor, dass die Druckerhöhungseinrichtung auf einem Magnetfeld gelagert ist. Eine weitere Verbesserung wird dadurch erzielt, dass als Antrieb für die Druckerhöhungseinrichtung ein Reluktanzmotor verwendet wird.

Mehrere Ausführungsbeispiele zu den erfindungsgemäßen Vorrichtungen und Zusatzaggregate zur Versorgung autarker Gebäude mit Energie und Trinkwasser sind in den Figuren dargestellt und werden im Folgenden näher erläutert.

Es zeigt,
- Figur 1: einen Schnitt durch eine Umkehrosmose-Durchlaufzentrifuge,
- Figur 2: eine teilweise geschnittene Ansicht einer Draufsicht auf die in Figur 1 gezeigte Zentrifuge,
- Figur 3: einen Schnitt durch eine selbstansaugende Durchlaufzentrifuge mit magnetischer Lagerung,
- Figur 4: einen Schnitt durch eine Durchlaufzentrifuge mit Reluktanzmotor,
- Figur 4a: eine schematische Darstellung zur Befestigung der Hohlfasermembranbündel in einem Radialborstenring,
- Figur 5: eine schematische Aufsicht auf die in Figur 4 gezeigten Blechpakete,
- Figur 5a: eine dreidimensionale Darstellung eines Zulaufdeckels für eine Durchlaufzentrifuge mit Vorreinigungseinrichtung.

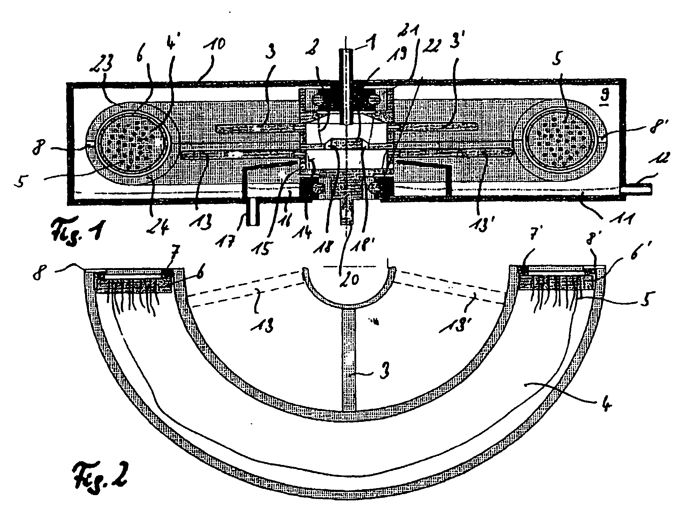

Die Figuren 1 bis 5 zeigen Umkehrosmose-Durchlaufzentrifugen. Diese Rotationsgeräte sind zur Trinkwassergewinnung aus Meerwasser über das Umkehrosmose-Verfahren konzipiert. Das angewendete Verfahren unterscheidet sich im Wesentlichen von herkömmlichen Verfahren, die eine Pumpe und einen anschließenden Filter einsetzen, dadurch, dass bei den Zentrifugen der Filter selbst in Rotation gesetzt wird. Bei einer geeigneten Drehzahl und der mitrotierenden Wassersäule kann dadurch der erforderliche Druck für einen osmotischen Filter aufgebaut werden. Diese Art der Druckerhöhung ist energetisch besonders wirkungsvoll, wenig verlustbehaftet und verschleißarm.

Die bisher energetisch als Verlust anzusehende Salzwasser-Konzentratspülung (ca. 50 % der Reinwassermenge) führt hier nicht zu einem entsprechend erhöhten Leistungsbedarf und kann daher wesentlich verstärkt werden. Dies kommt der Lebensdauer und den Reinigungszyklen der Filter zugute. Des weiteren können nach dem vorgestellten Prinzip auch kleinere Anlagen für einzelne Haushalte oder Segeljachten usw. wirtschaftlich hergestellt und mit geringem Energie- und Wartungsaufwand betrieben werden.

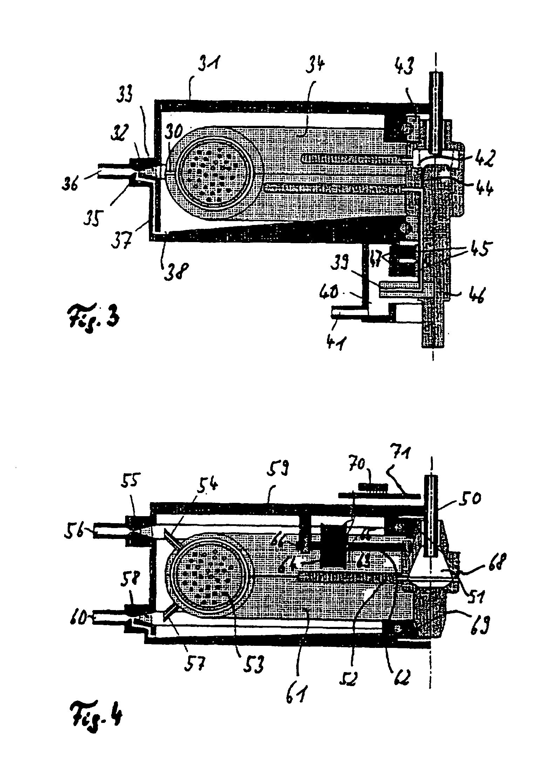

Die Figuren 1 und 2 zeigen eine Grundversion einer Umkehrosmose-Durchlaufzentrifuge. Über einen Einlassstutzen 1 erreicht das vorgefilterte Seewasser den rotierenden Teil und baut nach einer Füllphase bei konstanter Zufuhr das gestrichelt dargestellte stationäre Niveau 2 auf. Die gestrichelte Linie bildet eine der Drehzahl entsprechende Parabel. Durch mindestens zwei Speichen 3, 3', die als Rohre ausgebildet sind, gelangt das Salzwasser in die zwei abgeschlossenen und dichten Filterräume 4, 4', in denen sich ein Bündel aus Hohlfasern 5 befindet. Durch die Rotation und das Niveau 2 ist der Filterraum 4, 4' mit einem auch noch am kleinsten Radius ausreichenden Überdruck beaufschlagt, um das Salzwasser gegen den osmotischen Druck durch die Wände der Hohlfaser 5 zu befördern. Diese enden beidseitig in zusammen mit den Fasern gegossenen bzw. verklebten Abschlussplatten 6, 6'. Die hohlen Seelen der Fasern münden offen in den Innenbereich des Dichtringes 7, 7' und sind über die Auslassöffnung 8, 8' mit dem drucklosem Außenraum 9 verbunden. Das in der Seele der Fasern fließende, gefilterte Reinigungswasser fließt somit durch die zwei Öffnungen 8, 8' in den drucklosen Außenraum 9 und bildet aufgrund seiner kinetischen Energie zwei tangential rotierende Wasserstrahlen, die gegen die Wandung des abgeschlossenen Gehäuses 10 prallen. In der in den Figuren 1 und 2 beschriebenen Grundversion kommt das Wasser an der Gehäusewandung zur Ruhe und sammelt sich in dem Reinwasserbecken 11, wo es über den gezeichneten Stutzen 12 ausgelassen werden kann.

Der Meer- oder Schmutzwasserzufluss wird in zwei Teilströmen auf die zwei zur Rotationsachse punktsymmetrisch ausgebildeten Hälften der Durchlaufzentrifuge aufgeteilt. Dadurch werden Kreisströmungen um die Rotationsachse unterdrückt, die anderenfalls durch die vom Zentrum her zunehmende Beschleunigung auf die jeweilige Umfangsgeschwindigkeit induziert werden würden und eine Druckminderung am jeweiligen Radius und Strömungsverluste zur Folge hätten.

Das in den Filterräumen 4, 4' aufkonzentrierte Salzwasser fließt durch die Speichen 13, 13', die als Rohre ausgebildet sind, zurück zum Zentrum der Zentrifuge, wo es seine kinetische Energie und seinen Drehimpuls für die Rotation wieder zur Verfügung stellt. Das Salzwasser erreicht hierbei das radiale Niveau 14, dessen Radius ein wenig größer ist als der Radius vom Niveau 2. Dadurch bleibt der Durchfluss des Kondensats aufrecht erhalten und es kann durch die Auslassöffnung 15 dem rotierenden System entweichen. Ein Konzentratbehälter 16 fängt die Flüssigkeit auf und führt sie über einen Auslassstutzen 17 ab.

Die Überlauföffnungen 18, 18' verhindern bei unregelmäßiger oder zu starker Salzwasserzufuhr ein zu weites Ansteigen des Niveaus 2. Eine überhöhte Salzwasserzufuhr wird dann zusammen mit dem Konzentrat über den Auslassstutzen 17 abgeführt. Die unter dem Einlassrohr 1 angeordnete, rotierende zentrale Verteilerplatte 19 ist gegen die Überlauföffnungen 18, 18' leicht erhaben, so dass im Normalbetrieb bei konstantem Zufluss kein Durchfluss durch diese Öffnungen 18, 18' stattfindet.

Die in den Figuren 1 und 2 gezeigte Zentrifuge wird mechanisch über die Welle 20 angetrieben und ist gegenüber den ruhenden (in der Figur dunkler dargestellten) Teilen mit zwei Kugellagern 21 und 22 geführt. Der Filterraum 4 hat die Form eines Torus und besteht aus zwei, mit zwei O-Ringen (nicht gezeigt) abgedichteten Halbschalen 23, 24, die druckdicht verschraubt sind. Dadurch können die Hohlfaserbündel 5 am Ende ihrer Lebensdauer durch Neue ersetzt werden.

Die beschriebene Grundversion der Umkehrosmose-Durchlaufzentrifuge eignet sich zur mechanisch, rotatorischen Wellenanbindung an Standardelektromotoren mit geeigneter Drehzahl und Leistung. Sie ist jedoch auch für Windräder geeignet, die mit einem Getriebe zur Aufwärtsübersetzung versehen sind.

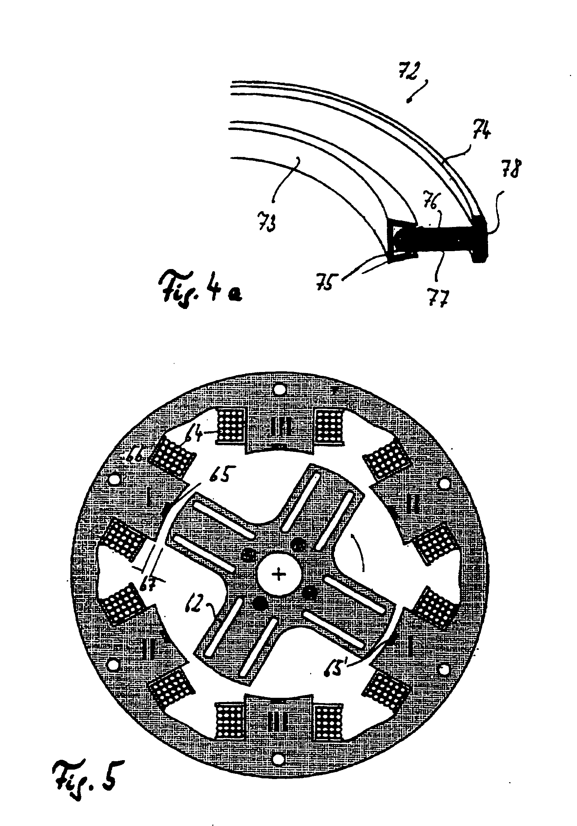

Bei der erforderlichen hohen Umfangsgeschwindigkeit werden ein Teil der Gesamtverluste durch den Strömungswiderstand des Rotors gegenüber der Umgebungsluft verursacht. Die Figuren 3 bis 5 zeigen daher Ausführungsbeispiele, bei denen der gesamte Rotor in einem Teilvakuum läuft. Dieses Teilvakuum liegt nicht unter ca. 100 mbar, damit der Siedepunkt von Wasser nicht erreicht wird. Die im Folgenden beschriebenen Durchlaufzentrifugen sind darüber hinaus selbstansaugend. Bei einem Unterdruck von 1000 mbar kann die Höhendifferenz zwischen Aufstellhöhe der Zentrifuge und dem Meeresspiegel etwa 9 Meter betragen. Eine Speisepumpe für die Zentrifuge ist somit nicht mehr notwendig. Nur zum Anfahren muss zunächst eine geringe Menge an Wasser einlassseitig zur Verfügung gestellt werden.

Die in Figur 3 gezeigte Zentrifuge ermöglicht die Förderung gegen einen ausgangsseitigen Überdruck, um zum Beispiel eine gewisse Förderhöhe überwinden zu können. Die bei der Zentrifuge nach Figur 1 und 2 bisher ungenutzte kinetische Energie der zwei Reinwasserstrahlen, die den Rotor mit ihrer hohen, äußeren Umfangsgeschwindigkeit tangential verlassen, wird bei dem Ausführungsbeispiel nach Figur 3 zur Druckerhöhung auf der Reinwasserseite verwendet.

Auf der Höhe des Filterauslasses 30 verläuft im ruhenden Gehäuse 31 komplett umlaufend eine Sammelrinne 32. Der in dieser Rinne befindliche Wasserring 33 wird durch die den Rohrrotor 34 tangential (da weitgehend drucklos) verlassenden Strahlen ständig angeschoben, so dass sich eine konstante Ringströmung einstellt. Über die Fliehkraft und die radiale Wasserringtiefe entsteht am größten Durchmesser des Rings ein Überdruck von einigen Bar. An dieser Stelle befindet sich die Austrittsbohrung 35 und das Reinwasser strömt an seinem engsten Querschnitt mit entsprechender Geschwindigkeit über den Stutzen 36 ins Freie. Im Bereich der Austrittsbohrung 35 befindet sich eine Entlüftungsbohrung, die zu einem Entlüftungsrohr 37 führt. Das Entlüftungsrohr arbeitet ähnlich einer Wasserstrahl-Pumpe und endet am Boden 38 des Gehäuses 31, um eine etwaige Wasseransammlung durch Spritzer innerhalb des Gehäuses 31 abzusaugen und das Gehäuse auszupumpen.

Das Konzentrat muss nun ebenfalls eine Druckdifferenz von ca. 900 mbar relativ zum Innendruck innerhalb des Gehäuses 31 überwinden, um ins Freie zu gelangen. Dazu wird es mit dem Rohr 39 geeigneter Länge oder mittels einer Bohrung in einer Scheibe auf die erforderliche Umfangsgeschwindigkeit gebracht. Ein Auffangbehälter 40 lässt das Konzentrat zur Ruhe kommen und es kann durch den Auslassstutzen 41 in die Umgebung abfließen.

Das Salzwasser am Einlas 42 sollte nicht in das obere Kugellager 43 gelangen. Sein Niveau wird mit der Überlaufbohrung 44 stabilisiert.

Die vakuumdichte, reibungsarme Drehdurchführung 45 der Antriebswelle 46 in das Gehäuse 31 besteht aus magnetischer Flüssigkeit, die über zwei Dauermagnetringe 47 mit radialer, entgegengesetzt gerichteter Magnetisierung im Spalt 45 gehalten wird. Über das magnetische Gehäusematerial und ein entsprechendes Wellenmaterial ergibt sich der gezeigte, geschlossene Magnetkreis.

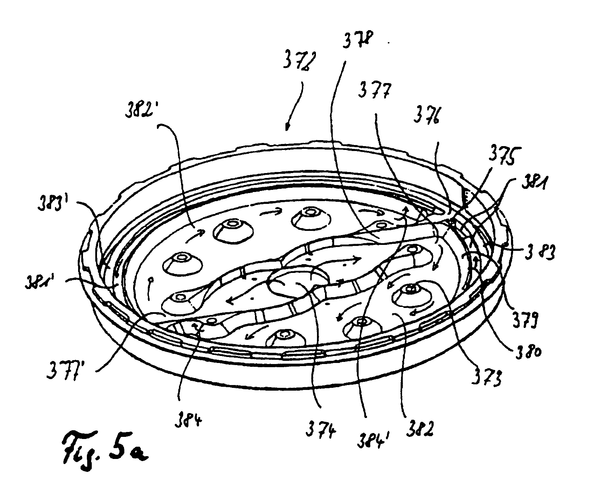

In den Figuren 4 und 5 ist eine weitere Variante gezeigt. Sie beseitigt das in den zuvor beschriebenen Varianten gezeigt Kugellager und eliminiert dadurch ein weiteres Verschleißteil. Außerdem hat diese Variante den Vorteil, dass das Reinwasser auf einen hohen Förderdruck gebracht wird, um beispielsweise einen hoch gelegenen Wassertank am Hang zu speisen.

Das durch den inneren Unterdruck angesaugte Meerwasser gelangt durch das zum Gehäuse dichte Einlassrohr 50 in den rotierenden Verteilerraum 51. Über mindestens zwei Kanäle 52, die als Speichen oder auch als Bohrungen in einer Platte ausgebildet sind, erreicht das Meerwasser die erforderliche Umfangsgeschwindigkeit und damit zusammen mit der Wassersäule in den Kanälen 52 den nötigen Druck, um durch die Hohlfasermembranen 53 zum Reinwasserstahlrohr 54 zu gelangen. Dort austretend hält es die Reinwasser-Ringströmung in Gang, die einen entsprechenden Ausflussdruck über eine Bohrung in den Reinwasserstutzen 56 hinein aufbaut.

Das Konzentratstahlrohr 57 verläuft leicht drehwinkelversetzt zum Stahlrohr 54 des Reinwassers aus dem Filterraum vor den Konzentratwasserring 58. Die kinetische Energie des Konzentratwasserrings 58 wird ähnlich einer Wasserringpumpe zur Aufrechterhaltung eines Unterdrucks im Rotorgehäuse 59 verwendet, da am Konzentratauslassstutzen 60 z.B. für den Rücklauf ins Meer ein großer Überdruck zur Umgebung benötigt wird.

Das Konzentrat wird somit über Sammelkanäle zu den der Rotationsrichtung im wesentlichen tangential rückwärtig gerichteten Auslaufdüsen geleitet, die den Druck in Geschwindigkeit wandeln und über den resultierenden Rückstoß den größten Teil der vorher eingebrachten Beschleunigungsenergie zurück in das Rotorsystem führen können. Die erfindungsgemäße Neuerung besteht nun darin, dass auch das Permeat (z. b. Trinkwasser) über ähnlich gestaltete Ausflussdüsen, das Rotorsystem verlässt. Diese Düsen werden über ihren engsten Querschnitt derart ausgelegt, dass sich ein Vordruck einstellt, der dem Differenzdruck der zu filtrierenden Flüssigkeit im Ringfilter an seinem größten und an seinem kleinsten Radius entspricht. Dadurch ist gewährleistet, dass die radialen Hohlfasern über ihre gesamte radiale Länge mit dem gleichen Filterdruck beaufschlagt werden und der Filterbetrieb des gesamten Filters im optimalen Arbeits- bzw. Betreibspunkt ermöglicht wird.

Die Stahlrohre 54 und 57 können jedoch auch mit einer tangential zum Rotor angeordneten Düse versehen sein. Dies führt dazu, dass die Düse eine Kraft entgegengesetzt zur Auslassrichtung auf den Rotor aufbringt und somit die Drehung des Rotors unterstützt.

Der ringförmig ausgebildete Filter besteht aus Hohlfasern, die vorwiegend radial ausgerichtet sind. Die Fasern werden gewickelt oder sind als radiale Einsätze (ähnlich einer Pinselgestalt) ausgeführt. Die Wicklungsausrichtung kann radial-axial oder radial-tangential sein.

Die Flüssigkeitszufuhr erfolgt am kleinsten Radius des Filterringes, die Abfuhr des Konzentrates vor einer ringförmigen Trennwand, durch die die Fasern einzeln abgedichtet eingesetzt sind. Die Fasern werden zum Beispiel im Schleudergussverfahren verschlossen. Der Austritt des Permeats - in der Regel der Trinkwasseraustritt - erfolgt am größten Radius des Filterringes.

Vorteilhaft wäre es auch wenn das Süßwasser innen aus dem Filterring austritt und die Fasern radial angeordnet sind und außen verschlossen sind. Alternativ dazu können die Fasern auch als Schleife ausgebildet sein, so dass die offenen Faserenden nebeneinander liegen.

Das Einbringen der Hohlfasermembranenden 53 im Rotor wird vorzugsweise über einen Radialborstenring 72 gelöst. Der Ring besteht aus einer inneren Bürsteneinfassung 73 und einem äußeren Epoxydharzschleudergußring 74. Die Hohlfasermembranbündel sind als Endlosmembranrohr aufgewickelt und werden auf der Seite der Bürsteneinfassung mittels eines Drahtringes 75 gehalten. Auf der Seite des Epoxydharzschleudergusses 74 ist ein Teil der aufgewickelten Membranen abgeschliffen, so dass parallelliegende offene Membranenden entstehen.

Bei der Verwendung eines derartigen Radialborstenringes gelangt der Rohwasserflüssigkeitsstrom an die Oberseite 76 und die unterseits 77 des Membranbündels. Das Reinwasser dringt in die Membranen ein und verlässt an dem Hohlfaseraustritt 78 den Borstenring, während das aufkonzentrierte Salzwasser radial an den Seiten 76 und 77 entlangströmt und anschließend durch eine andere Austrittsöffnung (nicht gezeigt) den Radialborstenring verlässt.

Der Radialborstenring ist als Hohlfasermembranfiltereinsatz ausgebildet und als nachlieferbares Ersatzteil konzipiert. Die Borsten bestehen aus Polyamid und haben einen Durchmesser von 100 bis 120 µm und der Innendurchmesser der Hohlfaser beträgt ca. 50 µm.

Das Gehäuse der Durchlaufzentrifuge übernimmt auf der Innenseite die Funktion des Auffangens der Flüssigkeitsstrahlen aus den rotierenden Düsen des Konzentrats und des Permeats. Hierbei ist wichtig, dass kein Konzentrat (z. B. mit Salz oder Schmutz beladen) in das Permeat ( z. B. Trinkwasser) gelangt. Umgekehrt sind kleine Verluste des Permeats in das Konzentrat akzeptabel. Da die rotationsbedingten Luftströmungen am Rotor radial nach außen gerichtet sind und in Nebelform Flüssigkeit transportieren können, ist der Konzentrat-Auffang am größeren und der Permeat-Auffang an einem kleineren Radius ausgeführt.

Der elektrische Antrieb des Rotors 61 ist im dargestellten Fall ein Reluktanz-Motor mit einem als Läufer ausgebildeten Blechpaket 62 aus weichmagnetischem Material. Der Läufer 62 kann jedoch auch aus (wie im Motorenbau üblich) Dauermagnetpolen bestehen. Hier ist jedoch die Regelung einer konstanten Magnetspaltbreite 63 zur Erhaltung der magnetischen Lagerung weitaus schwieriger.

In der Figur 5 gezeigten Aufsicht wird die Antriebs- und Magnetlagerfunktion deutlich. Das gegenüberliegende Spulenpaar 64 im Bereich I wird gleichsinnig mit Strom beauftragt, so dass sich der Läufer aufgrund des geringsten magnetischen Widerstands wie gezeigt ausrichtet. Die im Spalt befindlichen gegenüberliegenden analogen Hallsonden 65, 65' im oder vor dem Statorblech-Rückschlußpaket 66 messen die magnetische Feldstärke in beiden Spalten. Aus der Differenz der beiden Spaltfeldstärken, die noch in Relation zu den jeweiligen Einzelspulenströmen gesetzt werden muss, wird eine Stellgröße für die betreffende Einzelspule abgeleitet, die mit geeigneten Reglereigenschaften versehen die Magnetspaltbreite 67 konstant hält.

Die Hallsonden 65, 65' werden zusätzlich dazu benutzt, um bei Erreichen des max. Flusses den Motor zur nächsten Phase weiterzuschalten. Wird das Spulenpaar II aktiv und I abgeschaltet, so dreht sich der Läufer 62 entsprechend drehrichtungsmäßig definiert und mit Drehmoment, bis ebenfalls der gleiche Maximalfluss erreicht wird. Das Spulenpaar III schließt den Zyklus ab. Der im Lauf mittlere magnetische Gesamtfluss ist groß genug bemessen, um das Gewicht aller drehenden Teile zu tragen. Für den Stand und im Falle eines Stromausfalls sind die Notlager 68 und 69 konzipiert. Sie können Gleit- oder wie dargestellt - Kugellager sein . Die elektrische Steuerung 70 auf der Platine 71 kann so ausgelegt werden, dass bei Stromausfall zunächst die Generatorwicklung des Antriebs zum Erhalt der Stromversorgung genutzt wird, so dass der Rotor 62 erst bei einer niedrigen Drehzahl auf die Notlager 68 und 69 aufsetzt und dort zur Ruhe kommt.

Die Figur 5a zeigt einen im Bereich des Zulaufs anordenbaren Deckel 372, der mit einem an seinem Umfang angeordneten Bionettverschluss auf die Oberseite einer Zentrifuge aufschraubbar ist. Mehrere Bohrungen 373 erlauben es, den Deckel mittels Schrauben fest an der Zentrifuge zu befestigen. Bei aufgeschraubtem Deckel entstehen dadurch zwei punktsymmetrisch angeordnete Kanäle, die jeweils vom Einlauf 374 zu einem Auslauf 375 führen. Da die sichtbare erste Ebene 376 im Deckel 372 von der Unterschale und dem Filterring der Zentrifuge planabgedeckt sind, fließt das ungereinigte oder gegebenenfalls leicht vorgereinigte Salzwasser durch den Zufluss 374 in den Deckel und zunächst radial zum Randbereich des Deckels. Am tangentialen Einlass 377, 377' ist bereits eine zentrifugale Beschleunigung von beispielsweise über 10.000 g wirksam. Dadurch wirkt eine hohe Abtriebskraft auf spezifisch schwerere Teilchen. Dadurch trennen sich Teilchen, die schwerer sind als die sie umgebende Flüssigkeit während der Strömung der Flüssigkeit vom Einlauf 374 zum Auslauf 375. Besonders schwere Partikel werden schon an die Wandung 378 getrieben und gleiten dort radial entlang bis sie an der schrägen Wandung 379 bis zu einem Schlitz 380. Dieser Schlitz 380 erstreckt sich auf einer halbrunden Bahn zwischen der schrägen Wandung 379 und der darüber angeordneten Gehäuse Seite (nicht gezeigt). Hinter der Wandung 380 befindet sich ein Kanal 381, in dem die Flüssigkeit zum Auslass 375 fließt. Der Auslass 375 ist als Auslassdüse ausgebildet durch die Flüssigkeit unmittelbar aus dem Rotor hinausbefördert wird. Während die Flüssigkeit unter ständig hohen zentrifugalen Beschleunigungskräften den Abscheidebereich 382 passiert wandern schwerere Partikel zur schrägen Wandung 379, gelangen über die Wandung 380 und strömen in entgegngesetzter Richtung zum Auslass 375. Volumen und Länge des Abscheidebereichs 8 sind derart ausgeführt, dass die Strömungsgeschwindigkeit so gering ist, dass kleinere, langsam sinkende Teilchen genügend Zeit haben, um über die Wandung 379 und Stitz 380 in den Rückflusskanal 381 zu gelangen, indem das Konzentrat tangential gegenläufig der Zufuhrströmungsrichtungsrichtung zur Auslassdüse 375 gelangt. Dieser Sammelkanal 381 für das Konzentrat ist so ausgebildet, dass seine radiale Breite und sein Querschnitt für den bekannten Durchfluss eine Strömungsgeschwindigkeit erreicht, die den hier weiter sinkenden Teilchen keine Möglichkeit gibt, die äußere Wandung 383, 383' des Kanals 381, 381' zu treffen, bevor sie die Düse 375 erreichen. Dadurch können sich keine dieser Teilchen an der Wandung 383, 383' festsetzen und das System bleibt frei von Belegen. Am Ende des tangentialen Abscheidebereiches 382, 382' befindet sich die Einlassöffnung (nicht gezeigt) durch die die Flüssigkeit wie durch die Pfeile 384 und 384' angedeutet in die darunter liegende Filterebene, dass heißt den eigentlichen Filterbereich einströmt.

Die in dieser einfachen Ausführungsform als Deckel ausgebildete Filterstufe dient der Vorreinigung der Flüssigkeit und verständlicherweise können mehrere derartige Deckel übereinander positioniert werden, um eine mehrstufige Vorreinigung zu erzielen. Je nach Wasserqualität und Durchsatz können somit im Einzelfall mehr oder weniger Vorreinigungsstufen durch einfaches Aufsetzen weiterer Deckel erzeugt werden.

## Patentansprüche

1. Vorrichtung zur Reinigung von Flüssigkeiten mit einem Zulauf, einer Druckerhöhungseinrichtung, die einen Filterbereich aufweist, einem Membranelement und einem Ablauf, wobei die Druckerhöhungseinrichtung um eine Achse drehbar gelagert ist, so dass Zentrifugalkräfte zwischen Zulauf und Ablauf auf die Flüssigkeit wirken, ***gekennzeichnet durch*** eine Vorreinigungsstufe mit einem im Wesentlichen tangentialen Kanalsystem mit radialen Öffnungen, die einen Zufluss, einen Auslauf für schwere Partikel und eine Einlassöffnung, **durch** die die Flüssigkeit in den Filterbereich strömt, aufweist.

2. Vorrichtung nach Anspruch 1, ***dadurch gekennzeichnet*, *dass*** der Zulauf konzentrisch zum Membranelement angeordnet ist.

3. Vorrichtung nach einem der vorhergehenden Ansprüche, ***dadurch gekennzeichnet*, *dass*** das Membranelement ein Hohlfaserbündel aufweist.

4. Vorrichtung nach einem der vorhergehenden Ansprüche, ***dadurch gekennzeichnet*, *dass*** das Membranelement radial angeordnete Membranzylinder aufweist.

5. Vorrichtung nach Anspruch 4, ***dadurch gekennzeichnet*, *dass*** die Membranzylinder an einem Ende vorzugsweise im Schleudergussverfahren in Vergussharz eingegossen sind.

6. Vorrichtung nach einem der vorhergehenden Ansprüche, ***dadurch gekennzeichnet*, *dass*** die Vorrichtung zwei hintereinandergeschaltete Membranelemente aufweist.

7. Vorrichtung nach einem der vorhergehenden Ansprüche, ***dadurch gekennzeichnet*, *dass*** die Druckerhöhungseinrichtung tangential angeordnete Auslassdüsen für das Permeat und oder das Konzent-rat aufweist.

8. Vorrichtung nach einem der vorhergehenden Ansprüche, ***dadurch gekennzeichnet*, *dass*** die Druckerhöhungseinrichtung in einem teilweise evakuierbaren Raum angeordnet ist.

9. Vorrichtung nach Anspruch 8, **gekennzeichnet durch** eine Wasserstrahlpumpeneinrichtung, die der Evakuierung des Raumes dient.

10. Vorrichtung nach einem der vorhergehenden Ansprüche, ***dadurch gekennzeichnet*, *dass*** die Druckerhöhungseinrichtung mit einer magnetischen Flüssigkeit abgedichtet ist.

11. Vorrichtung nach einem der vorhergehenden Ansprüche, ***dadurch gekennzeichnet*, *dass*** die Druckerhöhungseinrichtung relativ zu einem sich radial nach außen konisch verjüngenden ringförmigen Spalt beweglich angeordnet ist.

12. Vorrichtung nach einem der vorhergehenden Ansprüche, ***gekennzeichnet durch*** ein Magnetfeld, auf die Druckerhöhungseinrichtung gelagert ist.

13. Vorrichtung nach einem der vorhergehenden Ansprüche, ***gekennzeichnet durch*** einen Reluktanzmotor, der die Druckerhöhungseinrichtung antreibt.

14. Vorrichtung nach Anspruch 14 oder 15, ***dadurch gekennzeichnet, dass*** sie mehrere, vorzugsweise hintereinander geschaltete Vorreinigungsstufen aufweist.

## Claims

1. A device for purifying fluids with an inlet, a pressure increasing apparatus comprising a filtering area, a diaphragm element and an outlet, the pressure increasing apparatus being carried to rotate about an axis so that centrifugal forces act upon the fluid between inlet and outlet, ***characterized by*** a prepurification stage having a substantially tangential runner system with radial apertures and comprising a feed runner, an outflow runner for heavy particles and an intake port through which the fluid flows into the filtering area.

2. The device according to claim 1, ***characterized in that*** the inlet is disposed concentrically with the diaphragm element.

3. The device according to one of the afore-mentioned claims, ***characterized in that*** the diaphragm element comprises a hollow fiber bundle.

4. The device according to one of the afore-mentioned claims, ***characterized in that*** the diaphragm element comprises radially disposed diaphragm cylinders.

5. The device according to claim 4, ***characterized in that*** the diaphragm cylinders are at one end cast in sealing resin, preferably by a centrifugal casting process.

6. The device according to one of the afore-mentioned claims, ***characterized in that*** the device comprises two series-connected diaphragm elements.

7. The device according to one of the afore-mentioned claims, ***characterized in that*** the pressure increasing apparatus comprises tangentially disposed outlet nozzles for the permeate and/or the concentrate.

8. The device according to one of the afore-mentioned claims, ***characterized in that*** the pressure increasing apparatus is disposed in a partially evacuatable space.

9. The device according to claim 8, ***characterized by*** a water jet pump system that serves to evacuate the space.

10. The device according to one of the afore-mentioned claims, ***characterized in that*** the pressure increasing apparatus is sealed using a magnetic fluid.

11. The device according to one of the afore-mentioned claims, ***characterized in that*** the pressure increasing apparatus is disposed so as to be movable relative to a radially outward tapering ring-shaped slot.

12. The device according to one of the afore-mentioned claims, ***characterized by*** a magnetic field that is carried on the pressure increasing apparatus.

13. The device according to one of the afore-mentioned claims, ***characterized by*** a reluctance motor that drives the pressure increasing apparatus.

14. The device according to claims 14 or 15; ***characterized in that*** it comprises a plurality of preferably series-connected prepurification stages.

## Revendications

1. Dispositif pour l'épuration de fluides avec une arrivée, un surpresseur qui comprend une zone de filtrage, un élément diaphragme et un écoulement, le surpresseur étant monté pivotant autour d'un axe de manière à ce que des forces centrifuges agissent sur le fluide entre l'arrivée et l'écoulement, ***caractérisé par*** un étage d'épuration préliminaire avec une canalisation sensiblement tangentielle présentant des ouvertures radiales et comprenant une admission, une sortie pour les particules lourdes et une ouverture d'entrée par laquelle le fluide s'écoule dans la zone de filtrage.

2. Dispositif selon la revendication 1, ***caractérisé en ce que*** l'arrivée est disposée de manière concentrique autour du élément diaphragme.

3. Dispositif selon l'une quelconque des revendications précédentes, ***caractérisé en ce que*** le diaphragme comprend un faisceau de fibres creuses.

4. Dispositif selon l'une quelconque des revendications précédentes, ***caractérisé en ce que*** le diaphragme comprend des cylindres à diaphragme.

5. Dispositif selon la revendication 4, ***caractérisé en ce que*** les cylindres à diaphragme sont coulés à un bout dans de la résine de scellement de préférence par un procédé de moulage par centrifugation.

6. Dispositif selon l'une quelconque des revendications précédentes, ***caractérisé en ce que*** le dispositif comprend deux diaphragmes montés en série.

7. Dispositif selon l'une quelconque des revendications précédentes, ***caractérisé en ce que*** le surpresseur comprend des tuyères de sortie pour le perméat et/ou le concentrat disposées tangentiellement.

8. Dispositif selon l'une quelconque des revendications précédentes, ***caractérisé en ce que*** le surpresseur est disposé dans un espace susceptible d'être partiellement évacué.

9. Dispositif selon la revendication 8, ***caractérisé par*** un éjecteur hydraulique qui sert à évacuer l'espace.

10. Dispositif selon l'une quelconque des revendications précédentes, ***caractérisé en ce que*** le surpresseur est rendu étanche par un fluide magnétique.

11. Dispositif selon l'une quelconque des revendications précédentes, ***caractérisé en ce que*** le surpresseur est disposé de manière à être mobile par rapport à une fente annulaire s'amincissant radialement vers l'extérieur.

12. Dispositif selon l'une quelconque des revendications précédentes, ***caractérisé par*** un champ magnétique qui est supporté par le surpresseur.

13. Dispositif selon l'une quelconque des revendications précédentes, ***caractérisé par*** un moteur à reluctance qui entraîne le surpresseur.

14. Dispositif selon les revendications 14 ou 15, ***caractérisé en ce qu'*** il comprend plusieurs étages de purification préliminaire de préférence montés en série.
